Europäisches Patentamt

(19) European Patent Office

Office européen des brevets

(11) Publication number: **0 079 192**
**B1**

(12) EUROPEAN PATENT SPECIFICATION

(45) Date of publication of patent specification: **18.06.86**

(21) Application number: **82305826.8**

(22) Date of filing: **02.11.82**

(51) Int. Cl.⁴: **B 65 G 19/22, E 21 F 13/06**

(54) Improvements in scraper chain conveyors.

(30) Priority: **02.11.81 GB 8132926**

(43) Date of publication of application:
**18.05.83 Bulletin 83/20**

(45) Publication of the grant of the patent:
**18.06.86 Bulletin 86/25**

(84) Designated Contracting States:
**AT DE FR GB**

(56) References cited:
**DE-A-2 003 183**
**DE-U-1 712 996**
**DE-U-7 109 416**
**FR-A-1 054 131**

(73) Proprietor: **PARSONS CONTROLS LIMITED**
**Stourport on Severn**
**Stourport Worcestershire DY13 9AT (GB)**

(72) Inventor: **Millington, Michael John**
**24 Kendlewood Road**
**Kidderminster Worcestershire DYLO 2XQ (GB)**

(74) Representative: **Lewis, David Overington**
**c/o Babcock International plc Cleveland House**
**19 St. James's Square**
**London SW1Y 4LN (GB)**

## Description

This invention relates to scraper chain conveyors and, more particularly, to scraper chain conveyors used to move particulate material, such as coal, along troughs or pans by means of scraper bars secured to endless conveyor chains spaced from inwardly lipped flanges of the troughs or pans.

In French Patent Specification No 1 054 131 there is provided a scraper chain conveyor having scraper bars secured to endless conveyor chains moveable along pans having inwardly lipped side flanges each scraper bar including a central portion and separate outer portions, the central portion having a width across the conveyor less than the distance between opposed edges of inwardly lipped flanges of an upper race thereof, the outer portions being formed with wings arranged to extend outwardly from the central portion closely to adjoin the inner faces of the inwardly lipped side flanges.

According to the present invention there is provided a scraper chain conveyor of the aforementioned form in which the central portion is formed with seatings profiled to conform with and transfer loading to a horizontally disposed link of chain, the outer portions are formed with retaining faces arranged to co-act with the seatings to retain the horizontally disposed link thereupon and bolts respectively positioned inboard and outboard of the conveyor chain each extending through bores in the central portion and the associated outer portion are arranged to secure the central portion to the associated outer portion.

Scraper chain conveyors are frequently utilised where difficult conditions exist—such as underground or in very abrasive situations. In such circumstances it is highly desirable to avoid structural failure, especially as initial failure is likely to go undetected and lead to extensive damage difficult to rectify in such difficult operating conditions. It is also desirable to facilitate to the greatest extent possible the replacement of worn parts, since, again, manual labour under such difficult operating conditions should be reduced to the minimum possible.

By forming the central scraper bar portions to seat directly on the chain a very strong connection is provided which, whilst readily permitting replacement, is unlikely to fail structurally., Since the outer portions are only likely to be loaded lightly and since such loading is transmitted through relatively large bearing surfaces and pairs of bolts, structural failure of the outer portions or deformation of the bolts is unlikely to occur, thereby considerably facilitating replacement should various components become worn. Thus a far more reliable arrangement is provided, which at the same time has a form making it very easy to effect replacement of worn parts, should the need arise.

The invention will now be described, by way of example with reference to the accompanying, partly diagrammatic, drawings, in which:—

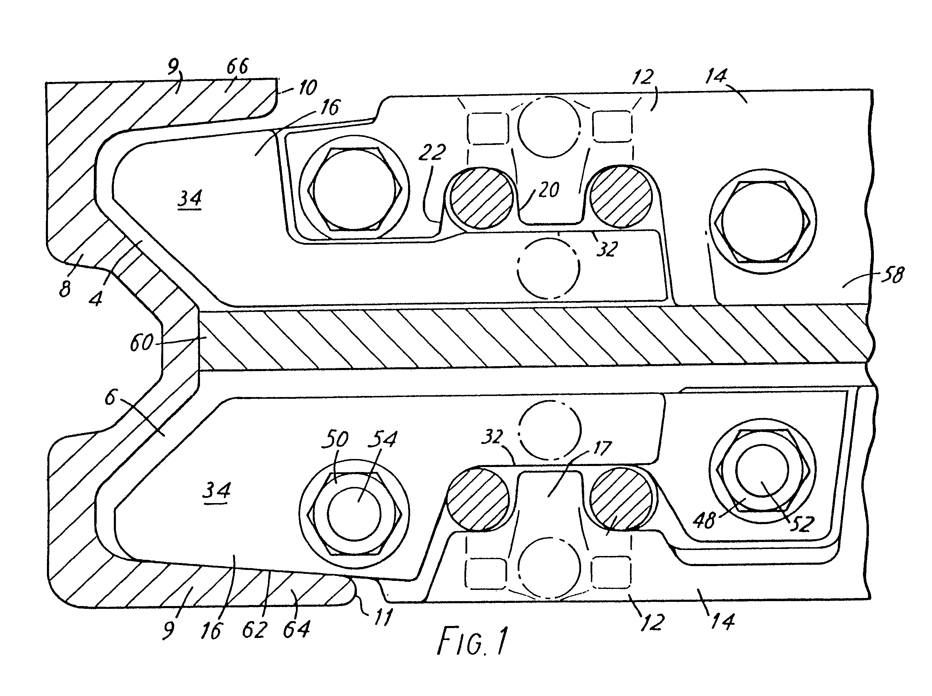

Figure 1 is a cross-sectional elevation of a portion of a scraper chain conveyor, showing part of a pan with corresponding parts of scraper bars in upper and lower races;

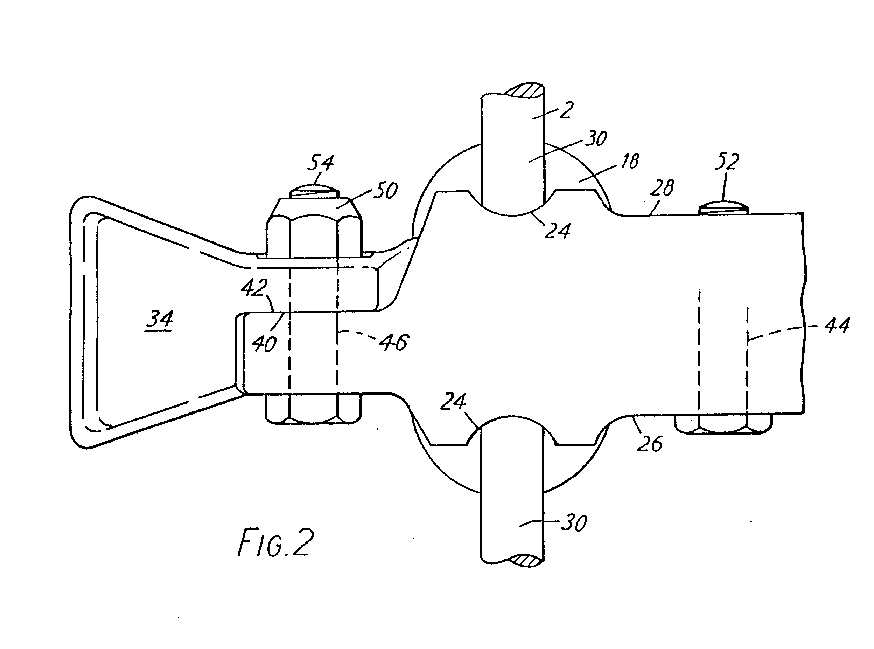

Fig. 2 is a top plan view of the part of the scraper bar in the upper race; and

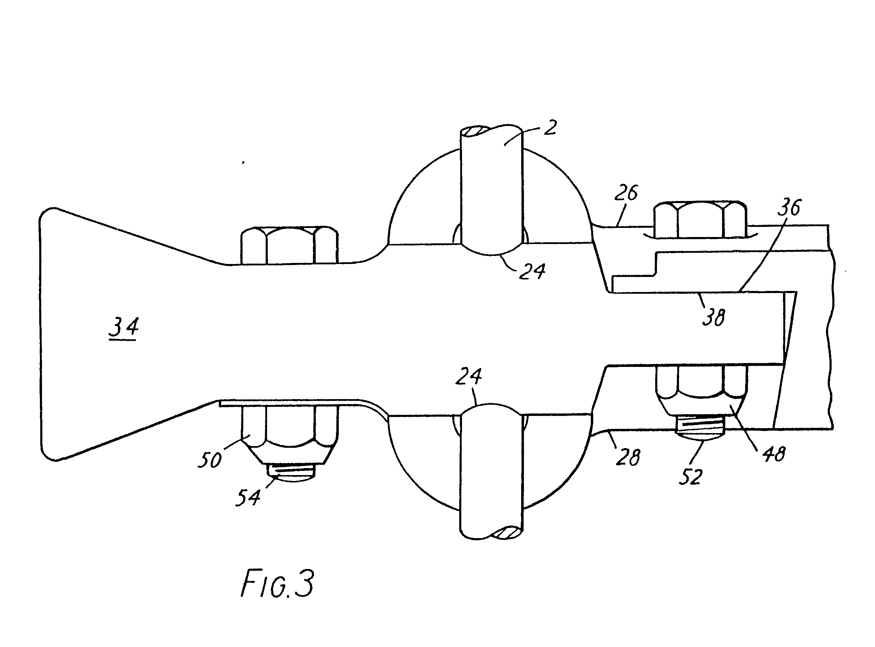

Figure 3 is a plan view of the part of the scraper bar in the lower race.

The scraper chain conveyor includes a pair of endless chains 2 passing over sprocket wheels (not shown) and running in upper and lower races 4, 6 formed by inwardly lipped side flanges 8 on pans 9 extending along the length of the conveyor. The endless chains are spaced inboard of the inner longitudinal edges 10, 11 of the inwardly lipped flanges and, at spaced intervals, have scraper bars 12 secured thereto. Each scraper bar consists of a central portion 14 and, bolted to each end thereof, outer portions 16. The central portions 14 are of a width across the pan less than the distance between the opposed inner longitudinal edges 10 of the upper race 4. At each end, the central portion 14 is formed with a seating 17 profiled to conform with a horizontally disposed link 18 of chain, a central land 20 engaging inner parts of the link and shoulders 22 engaging outer parts of the link. Recesses 24 are provided in the leading and trailing faces 26, 28 of the seating to accommodate the adjoining vertically disposed, links 30.

Each outer portion 16 of the scraper bar includes a retaining face 32 arranged to abut and co-act with the land 20 and shoulders 22 on the associated seating 17 on the central portion 14 to secure the horizontally disposed link 18 of chain to the central portion. Outboard of the retaining face 32 each outer portion 16 extends as a wing 34 into the region bounded by the inwardly lipped flange 8, the edge profile of the wing corresponding closely to the internal contours of the flange.

Inboard and outboard of the seating 17, the central portion 14 and the outer portion 16 are formed with upright mating faces 36, 38 and 40, 42 lying in planes perpendicular to the direction of movement of the conveyor. Aligned bores 44, 46 are drilled in the central portion and outer portion inboard and outboard of the seating through the mating faces (36, 38 and 40, 42). The outer portion 16 is secured to the central portion 14 by tightening down nuts 48, 50 on bolts 52, 54 passed through the bores.

The central portion 14 has a cross-section approximating to triangular with an upright leading face 26 and tapers down to a relatively narrow edge 58 adjacent the web 60 forming the floor of the pan 9. The wings 34 of the outer portions 16 are of generally trapezoidal cross-section and are profiled to contact the upper face 62 of the lower lip 64 of the inwardly lipped flange 8 in the lower race 6—which has a greater lateral dimension than the corresponding lip 66 of the upper race more readily to support the scraper bars, and thus the conveyor chain, in the lower race.

To assemble a scraper bar onto the conveyor chains, the outer portions 16 are first positioned in the upper race 4 with the retaining faces 32 subadjacent the respective horizontally disposed links 18 of chain. The central portion 14 is then positioned in register with the outer portions and links, the width of the central portion across the pan 9 permitting passage past the opposed lips 10 of the inwardly lipped flanges (8), and the nuts 48, 50 tightened down on bolts 52, 54 passed through the aligned bores 44, 46 in the central portion and outer portions.

It will be appreciated that loading between the scraper bars and the endless chains is transferred from the seatings (17) on the central portions 14 to the horizontal links 18 and hence that the outer portions 16 are not subjected to great loading, since they serve only to retain the horizontal links 18 in position. Thus no undue loading is placed on the bolts 52, 54 and damage thereto is avoided—thereby facilitating their removal when replacement of a scraper bar is required.

## Claims

1. A scraper chain conveyor having scraper bars (12) secured to endless conveyor chains moveable along pans (9) having inwardly lipped side flanges (8) each scraper bar including a central portion (14) and separate outer portions (16), the central portion having a width across the conveyor less than the distance between opposed edges (10) of inwardly lipped flanges of an upper race (4) thereof, the outer portions being formed with wings (34) arranged to extend outwardly from the central portion closely to adjoin the inner faces of the inwardly lipped side flanges (8) characterised in that the central portion is formed with seatings (17) profiled to conform with and transfer loading to a horizontally disposed link of chain, the outer portions are formed with retaining faces (32) arranged to co-act with the seatings (17) to retain the horizontally disposed link (18) thereupon and bolts (52, 54) respectively positioned inboard and outboard of the conveyor chain each extending through bores (44, 46) in the central portion and the associated outer portion are arranged to secure the central portion to the associated outer portion.

2. A scraper chain conveyor as claimed in Claim 1, characterised in that the width of the central portions (14) of the scraper bars (12) is less than the width between the edges (10) of the upper lips (66) of the inwardly lipped side flanges and is greater than the width between the edges (11) of the lower lips (64).

3. A scaper chain conveyor as claimed in Claim 1 or Claim 2, characterised in that the seatings (17) on the central portions of the scraper bars are spaced substantially inboard of edges (11) of the lower lips (64) of the inwardly lipped side flanges.

4. A scraper chain conveyor as claimed in any preceding claim, characterised in that the central portion (14) of each scraper bar is of a cross-section approximating to triangular with an upright leading face (26) tapering down to a relatively narrow edge (58) adjacent the web (60) forming the floor of the pan (9) and the central portion (14) and the outer portions (16) are formed with upright mating faces (36, 38 and 40, 42) lying in planes perpendicular to the direction of movement of the conveyor.

## Patentansprüche

1. Kratzkettenförderer mit Kratzstangen (12), die an endlosen Förderketten befestigt sind, welche entlang innenseitig mit Lippen versehenen Seitenflanschen (8) ausgestatteten Pfannen (9) bewegbar sind, wobei jede Kratzstange einen Mittelteil (14) und getrennte Außenteile (16) umfaßt, der Mittelteil eine Breite über den Förderer aufweist, die geringer ist als die Entfernung zwischen gegenüberliegenden Rändern (10) von innenseitig mit Lippen versehenen Flanschen eines oberen Laufes (4) und die Außenteile mit Flügeln (34) versehen sind, die sich vom Mittelteil nach außen zu erstrecken, um so nahe an die Innenflächen der innenseitig mit Lippen versehenen Seitenflansche (8) anzugrenzen, dadurch gekennzeichnet, daß der Mittelteil mit Auflagerungen (17) versehen ist, die derart geformt sind, daß die einem horizontal angeordneten Kettenglied angepaßt sind und Belastungen zu diesem übertragen, daß die Außenteile mit Halteflächen (32) ausgestattet sind, die mit den Auflagerungen (17) zusammenwirken, um das horizontal angeordnete Glied (18) darauf zu halten, und daß innen bzw. außen zur Förderkette angebrachte Bolzen (52, 54), die sich jeweils durch Bohrungen (44, 46) im Mittelteil und dem zugeordneten Außenteil erstrekken, angeordnet sind, um dem Mittelteil mit dem zugeordneten Außenteil zu befestigen.

2. Kratzkettenförderer nach Anspruch 1, dadurch gekennzeichnet, daß die Breite der Mittelteile (14) der Kratzstangen (12) geringer ist als die Breite zwischen den Rändern (10) der oberen Lippen (66) der innen mit Lippen versehenen Seitenflansche und größer als die Breite zwischen den Rändern (11) der unteren Lippen (64) ist.

3. Kratzkettenförderer nach Anspruch 1 oder 2, dadurch gekennzeichnet, daß die Auflagerungen (17) auf den Mittelteilen der Kratzstangen im wesentlichen innerhalb der Ränder (11) der unteren Lippen (64) der innen mit Lippen versehenen Seitenflansche verteilt sind.

4. Kratzkettenförderer nach einem der vorhergehenden Ansprüche, dadurch gekennzeichnet, daß der Mittelteil (14) jeder Kratzstange einen einem Dreieck angenäherten Querschnitt mit einer aufrechten Führungsfläche (26) hat, die zu einer relativ schmalen Kante (58) nahe des Steges (60) abgeschrägt ist, der den Boden der Pfanne (9) bildet, und daß der Mittelteil (14) und die Außenteile (16) mit stehenden, angepaßten Flächen (36, 38 und 40, 42) versehen sind, die in zur Bewegungsrichtung des Förderers lotrechten Ebenen liegen.

## Revendications

1. Transporteur à chaînes à raclettes comportant des barres racleuses (12) fixées à des chaînes transporteuses sans fin mobiles le long de cartes (9) présentant des rebords latéraux (8) garnis de lèvres vers l'intérieur, chaque barre racleuse comportant une partie centrale (14) et des parties extérieures séparées (16), la partie centrale ayant transversalement au transporteur une largeur inférieure à la distance séparant les bords opposés (10) de rebords garnis de lèvres vers l'intérieur, d'un chemin supérieur (4) de la partie centrale, les parties extérieures présentant des ailes (34) agencées pour s'étendre vers l'extérieur à partir de la partie centrale pour avoisiner de près les faces intérieures des rebords latéraux garnis de lèvres vers l'intérieur (8), caractérisé en ce que la partie centrale présente des berceaux (17) profilés de façon à s'adapter et à transmettre les charges à un maillon de la chaîne, disposé horizontalement, les parties extérieures présentent des faces de retenue (32) agencées pour coopérer avec les berceaux (17) pour retenir le maillon disposé horizontalement sur ceux-ci et des boulons (52, 54) respectivement disposés intérieurement et extérieurement à la chaîne de transporteur traversant chacun des alésages (44, 46) de la partie centrale et de la partie extérieure associée sont agencés pour fixer la partie centrale à la partie extérieure associée.

2. Transporteur à chaîne à raclettes selon la revendication 1, caractérisé en ce que la largeur des parties centrales (14) des barres racleuses (12) est inférieure à la largeur séparant les bords (10) des lèvres supérieures (66) des rebords garnis de lèvres vers l'intérieur, et est supérieure à la largeur séparant les bords (11) des lèvres inférieures (64).

3. Transporteur à chaîne à raclettes selon la revendication 1 ou 2, caractérisé en ce que les berceaux (17) des parties centrales des barres racleuses sont espacés sensiblement vers l'intérieur des bords (11) des lèvres inférieures (64) des rebords latéraux garnis de lèvres vers l'intérieur.

4. Transporteur à chaîne à raclettes selon l'une quelconque des revendications précédentes, caractérisé en ce que la partie centrale (14) de chaque barre racleuse a une section approximativement triangulaire comportant une face menante dressée vers le haut (26) qui s'amenuise vers le bas jusqu'à un bord relativement étroit (58) voisin de l'âme (60) formant le plancher du blac (9) et la partie centrale (14) et les parties extérieures (16) presentent des faces appariées dressées vers le haut (36, 38 et 40, 42) s'étendant dans des plans perpendiculaires à la direction de mouvement du transporteur.

FIG.1

FIG.2

FIG.3